# EUROPEAN PATENT SPECIFICATION

(11) **EP 3 074 347 B1**
(45) Date of publication and mention of the grant of the patent: **18.09.2019**
(21) Application number: 14803221.2
(22) Date of filing: 25.11.2014
(51) Int. Cl.: C02F 1/463

(54) **METHOD AND APPARATUS FOR TREATMENT OF AQUEOUS DISPERSION**
VERFAHREN UND VORRICHTUNG ZUR BEHANDLUNG EINER WÄSSRIGEN DISPERSION
PROCÉDÉ ET APPAREIL POUR LE TRAITEMENT D'UNE DISPERSION AQUEUSE

(30) Priority: 29.11.2013 GB 201321087
(43) Date of publication of application: 05.10.2016
(73) Proprietor: Kolina Limited, Hatfield, Hertfordshire AL10 8YG (GB)
(72) Inventor: RITCHIE, Daniel Thomas Exley, Manchester, Greater Manchester M2 4WQ (GB); HENSBY, Roger Nicholas, Manchester, Greater Manchester M2 4WQ (GB)
(74) Representative: Appleyard Lees IP LLP
(86) International application number: PCT/GB2014/053467
(87) International publication number: WO 2015/079209

(56) References cited:
- WO-A1-03/086981
- WO-A1-2004/046045
- WO-A2-00/73215
- US-A- 3 841 483

## Description

### FIELD

The present invention relates to methods and apparatus for electrocoagulation treatment of aqueous dispersions, in particular for electrocoagulation treatment of aqueous dispersions or slurries in order to facilitate removal of particles therefrom by flocculation. The invention is particularly concerned with improvements to the control of electrocoagulation treatment when applied to effluent streams of varying concentrations.

### BACKGROUND

The stabilisation and aggregation of colloidal dispersions or emulsions of particles in water or in aqueous solutions, has been explained in terms of DLVO theory (an acronym for the workers Derjaguin, Landau, Verwey and Overbeek who developed the theory) which combines the effects of van der Waals attraction with electrical double layer repulsion between dispersed, charged colloidal particles.

Commonly charged colloidal particles (i.e. colloidal particles having the same sign of charge) are stabilised in colloidal dispersions by mutual electrostatic repulsion forces exceeding the attractive van der Waals attraction.

The charged particles may attract counterions, of opposite charge, to their charged surfaces, from their aqueous surroundings, resulting in the formation of an electrical double layer (EDL) at the particle surface. This EDL screens the electrical repulsion between particles, and so by formation of a suitable EDL, the electrostatic repulsion between the commonly charged colloidal particles may be sufficiently screened in order to allow van der Waals forces to drive coalescence of the particles into larger, bulk agglomerates or flocs.

Typically, for water purification, or for winning of desired materials, such as heavy metals, from an aqueous dispersion or slurry, in order to remove colloidal particles from water by flocculation, modification of the EDL may be achieved by addition of electrolyte to the colloidal dispersion to be flocculated. However, for water purification, this has the disadvantage that high levels of dissolved electrolyte may remain in the water remaining after flocculated particles of material have been removed.

Electrocoagulation is based upon the use of electrochemical dissolution of an electrode by electrolytic oxidation with OH⁻ to form counterions of high charge, at the anodes, which can aid flocculation (typically cations such as Fe³⁺ or Al³⁺ for flocculation of fatty particles) without the need for addition of corresponding salt-derived anions into the aqueous dispersion to be treated (typically OH⁻ will be the counterions formed in the electrocoagulation process). In parallel with the formation of the cations formed at the anode, gas bubbles (hydrogen) are also formed at the cathode. The term "electrocoagulation" as used herein also encompasses electroprecipitation.

For a typical electrocoagulation system, opposed electrodes may be used to provide a voltage difference across one or more sacrificial electrodes positioned between the opposed electrodes, usually with the sacrificial electrodes not electrically connected to each other or to the opposed electrodes other than through the aqueous dispersion. This results in an electrical field being set up across the sacrificial electrodes, causing them to have cathodic and anodic surfaces and causing a current to flow between them and the opposed electrodes, typically with the material of the sacrificial electrodes oxidising and dissolving at the anodic surfaces and hydrogen bubbles being generated at the cathodic surfaces. For instance with sacrificial electrodes of aluminium, aluminium hydroxide is formed at the cathode and can lead to flocculation or co-precipitation of colloidal particles within the aqueous dispersion to be treated.

For removal of dispersed particulate matter from water, particularly fatty particles, the presence of gas bubbles from the cathode, subsequently entrained within the resulting floc of the particulate matter, may assist in removal of the flocculated particulate matter by flotation and bulk separation, as when the matter is fatty in nature it is typically of lower density than water. The additional presence of entrained gas bubbles generated in the electrocoagulation (EC) process may further reduce the density of the floc formed, assisting in speeding separation by flotation of the floc to form a separate layer for subsequent removal to leave purified water.

Patent applications WO 00/73215 A2 and WO 03/086981 A1 describe known electrocoagulation systems for treating water.

A problem with control of electrocoagulation systems, for instance when applied to purification of waste water dispersions or slurries from a factory or manufacturing plant, is the need to provide adequate levels of dissolved sacrificial electrode material to provide sufficient material to enhance flocculation, whilst ensuring that excessive electrical power consumption is avoided. For many practical situations, there may be two major types of aqueous dispersion produced as effluent from factory operations. There may be a concentrated effluent which is generated when the factory is operating normally, and there may be a dilute effluent which is generated when the factory or plant machinery is being washed down or subject to cleaning. It will be understood that intermediates between these two extremes may also occur.

For instance a plant such as an abattoir, or a food manufacturing plant generating pre-cooked meals, or an ice cream plant, or a plant for recycling of polymer from waste packaging or the like, may generate effluent streams, in normal operation, which include aqueous slurries including high levels of fats dispersed in aqueous solution containing electrolytes. Typically, during normal operation, the fat levels and electrolyte levels may be related, so that an increase in fat level will typically be accompanied by an increase in electrolyte level, and vice versa. However, when such a plant is subjected to cleaning by wash-down with water, the resulting effluent may have a substantially reduced electrolyte concentration, correspondingly with a low particulate concentration.

When a concentrated effluent is to be treated, high levels of coagulant may be needed. Typically, the amount of dissolved coagulant will increase as the current passing between the opposed electrodes increases. However, when a plant is being washed down and generating a dilute effluent stream, if may no longer be necessary to have high levels of coagulant present.

Hence, there is thus a need for electrocoagulation methods and apparatus which can handle both concentrated effluent streams and dilute effluent streams for flocculation of particulate matter for subsequent removal from water, without requiring manual intervention from an operator, and without causing excessive electrical power consumption or excessively rapid dissolution of sacrificial electrodes.

### SUMMARY

It is one aim of the present invention, amongst others, to provide electrocoagulation methods and apparatus which allow for efficient flocculation of particulates in aqueous dispersions or slurries without excessive power consumption and without excessive consumption of sacrificial electrodes. It is also an aim of the invention to provide electrocoagulation methods and apparatus which address problems known from prior art electrocoagulation systems or which address other problems, such as those mentioned herinafter or otherwise present for electrocoagulation systems. For instance, one aim of the invention is to provide an electrocoagulation system suitable for treatment of both dilute and concentrated waste water streams from plant operations, such as food plant operations. In particular, it is an aim of the invention to provide electrocoagulation apparatus and methods suitable for purification of water by flotation separation of fatty matter from a waste water stream. Another aim of the invention is to provide electrocoagulation apparatus and methods suitable for use in separating particulate matter from an aqueous slurry or dispersion as part of a process for winning and extracting desired materials, such as heavy metals. It is also one aim of the invention to provide an electrocoagulation method and apparatus which may be used continuously to treat effluent streams of varying concentrations without the need for operator input, in a power efficient manner, and which reduce or eliminate risk of polluting waste entering the public sewage system or environment. It i also an aim of the invention to provide an alternative to prior art methods and apparatus.

According to the present invention there is provided an apparatus and method as set forth in the appended claims. Other features of the invention will be apparent from the dependent claims, and the description which follows.

Throughout this specification, the term "comprising" or "comprises" means including the component(s) specified but not to the exclusion of the presence of other components. The term "consisting essentially of" or "consists essentially of" means including the components specified but excluding other components except for components added for a purpose other than achieving the technical effect of the invention. The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

By the term "substantially constant", as used herein, is meant varying by less than +/-3%, preferably less than +/-1%, more preferably less than +/-0.5%, from a predetermined value.

The optional features set out herein may be used either individually or in combination with each other where appropriate, and particularly in the combinations as set out in the accompanying claims. The optional features for each aspect or exemplary embodiment of the invention, as set out herein, are also applicable to any other aspects or exemplary embodiments of the invention where appropriate. In other words, the skilled person reading this specification should consider the optional features for each aspect or embodiment of the invention as interchangeable and combinable between different aspects or exemplary embodiments of the invention.

A first aspect of the invention provides a method for applying electrocoagulation treatment to an aqueous dispersion, the method comprising:
a: flowing the aqueous dispersion through a region of a flow-through cell comprising sacrificial electrodes and located between opposed electrodes, and
b: applying a voltage V across the opposed electrodes whereby a current C is passed between the opposed electrodes through the sacrificial electrodes whereby the sacrificial electrodes donate cations to the aqueous dispersion,
wherein the voltage is maintained at or below a value Vₘₐₓ when the conductivity of the aqueous dispersion is Sₘᵢₙ or less; wherein the voltage V is controlled to decrease from Vₘₐₓ to Vₘᵢₙ, as the conductivity of the aqueous dispersion increases from Sₘᵢₙ to Sₘₐₓ, with the current C maintained at a value Cₘᵢₙ when the conductivity of the aqueous solution is between Sₘᵢₙ and Sₘₐₓ; and wherein the voltage V is maintained at Vₘᵢₙ for conductivities of the aqueous dispersion increases from Sₘₐₓ to Sₜₒₜ, with the current C increasing from Cₘᵢₙ to Cₘₐₓ as the conductivity of the aqueous solution increases from Sₘₐₓ to Sₜₒₜ.

The sacrificial electrodes may be of any suitable material for electrochemical dissolution, depending upon the nature of the aqueous dispersion to be treated. Typically, the sacrificial electrodes may be of metal, and may comprise or consist essentially of aluminium or iron (e.g. steel). Aluminium-based electrodes (i.e. made using an alloy in which aluminium is a major component) may be particularly useful for the treatment of waste water in order to provide coagulation and coalescence of fatty materials dispersed therein whereby purification by bulk separation of fatty material and purified water may be facilitated. The opposed electrodes may suitably be of a material having a higher resistance to electrochemical dissolution then the sacrificial electrodes. For instance, if the sacrificial electrodes are of aluminium, the opposed electrodes may be of steel. If the sacrificial electrodes are of one grade of steel, the opposed electrodes may be of a different grade of steel, more resistant to electrolytic dissolution than the steel of the sacrificial electrodes.

The term aqueous dispersion as used herein refers to any liquid suitable for application of electrocoagulation treatment, and includes flowable dispersions or slurries of particulate solids or liquids present in a continuous phase of solvent or solution typically including water as a component. Typically the solvent or solution may be aqueous solvent or solution. The term particle merely means "small portion" and particles may be of liquid or solid, so for instance the oil droplets in an oil-in-water emulsion used as liquid are referred to herein as oil particles dispersed in a continuous aqueous phase. Typically the particles may have a diameter, for instance as measured by light scattering techniques, from 1 to 10,000nm (i.e. colloidal particles).

For the method of the first aspect of the invention, the sacrificial electrodes are preferably not electrically (conductively) connected to each other or to the opposed electrodes other than through the aqueous dispersion. For instance, the sacrificial electrodes may be supported between the opposed electrodes by being held in an electrically insulating carrier.

The region comprising the opposed electrodes and sacrificial electrodes may be within a flow-through assembly comprising: sacrificial electrodes retained within a chamber, for instance held within an insulating frame; an inlet port and an outlet port arranged for flow of the aqueous dispersion through the chamber, into the inlet port, over the sacrificial electrodes, and out of the outlet port; a first electrode on an inner face of the chamber and a second electrode positioned opposite to the first electrode, such that the sacrificial electrodes are located between the opposed (first and second) electrodes.

In one suitable arrangement, an insulating frame for holding the sacrificial electrodes between the opposed electrodes in use may comprise a pair of opposed jambs or pillars of electrically insulating material having one or more sheets forming the sacrificial electrodes each having opposed edges retained in a respective slot in each opposed jamb. The sheets may typically be rectangular in shape, though this is not essential to the invention. The insulating frame may act as a replaceable cartridge to facilitate rapid replacement of the sacrificial electrodes when they are spent or damaged.

It will be understood that any suitable arrangement may be used for the opposed electrodes, for instance with an inner electrode located within a surrounding outer electrode to provide the opposed electrodes. For instance the inner electrode may be a rod with an outer electrode as a coaxial cylinder surrounding it and the sacrificial electrodes may be cylinders of various diameters coaxially positioned between the opposed electrodes.

The method of the invention involves applying a voltage across the opposed electrodes whereby a current is passed between the opposed electrodes through the sacrificial electrodes whereby the sacrificial electrodes donate cations to the aqueous dispersion. This current passes through the aqueous dispersion and will lead to the sacrificial electrodes having anodic and cathodic surfaces as a result of the applied electrical field.

The voltage may be applied, for instance, by means of an electrical power supply arranged across the opposed electrodes. Typically, a voltage of up to 600V, say 1 to 550V may be applied, with a direct current in the range up to 60 Amperes (A), with say from 1 to 55A, passing between the opposed electrodes.

The method involves the voltage between the electrodes being maintained at or below a value Vₘₐₓ (or controlled to not exceed Vₘₐₓ, typically remaining within say 10% of Vₘₐₓ, for instance within 5%) when the conductivity of the aqueous dispersion is Sₘᵢₙ or less, and wherein the voltage is allowed to decrease, to values less than Vₘₐₓ, when the conductivity of the aqueous dispersion is greater than Sₘᵢₙ, as the conductivity increases. In this way, the current passing between the electrodes may be determined by the conductivity of the aqueous dispersion when the conductivity of the aqueous dispersion is Sₘᵢₙ or less. As the voltage remains at, or below, Vₘₐₓ for these low conductivities, the current will decrease in accordance with Ohms law as the conductivity decreases below the value Sₘᵢₙ. For treatment of aqueous dispersions where the electrolyte concentration, and hence conductivity, of the aqueous dispersion, increases or decreases along with the concentration of particulate matter in the aqueous dispersion, when the conductivity of the aqueous dispersion falls below the level Sₘᵢₙ, it follows that there will only be low levels of particulate matter required for flocculation and so lower levels of dissolved coagulant may be required from the sacrificial electrodes. As the amount of coagulant increases or decreases with the amplitude of the current, at conductivity levels below Sₘᵢₙ, the current may be allowed to decrease as the conductivity decreases (i.e. as resistance between the opposed electrodes increases). As the electrical power consumption is (current)² x resistance, or (voltage)² / resistance, by not allowing the voltage to exceed Vₘₐₓ, as the conductivity drops below Sₘᵢₙ, the power consumption of the electrocoagulation process may be reduced as the current is allowed to decrease when lower levels of coagulant are acceptable.

Suitably, Vₘₐₓ may be from 240 to 520 V, for instance from 240 to 480 V such as from 240 to 360 V. It will be understood that for any particular aqueous dispersion, the skilled person will easily be ably to establish a value for Sₘᵢₙ, by simple measurement of the particulate levels following flocculation and separation, in order to ensure that a required level of particulate removal is achieved, for instance so that the separated, purified water may meet local requirements for input into a public sewage network.

Sₘᵢₙ may be such that the current passed between the opposed electrodes, when the voltage applied is Vₘₐₓ, is from 5 to 20 A, for instance from 7 to 15 A such as from 8 to 12A.

As an example, the value of Sₘᵢₙ may be from 50mS/m to 5S/m, such as from 100mS/m to 3S/m, for instance from 500mS/m to 2S/m.

The conductivity of the aqueous dispersion may be measured by a conductivity monitor. Alternatively or additionally, the conductivity of the aqueous dispersion may be derived from measurements of the voltage and current across the opposed electrodes.

The current is maintained at a constant value Cₘᵢₙ over the conductivity range from Sₘᵢₙ to Sₘₐₓ, or it may be desirable to control the current and voltage such that the current increases from Cₘᵢₙ at a conductivity of Sₘᵢₙ to a current up to Cₘₐₓ corresponding to the conductivity of Sₘₐₓ. In one suitable arrangement according to the invention, the electrical power consumption may be maintained substantially constant over the range Sₘᵢₙ to Sₘₐₓ, with the current increasing as the electrical resistance between the opposed electrodes decreases as the conductivity increases.

In one exemplary embodiment according to the first aspect of the invention, an electrolyte may added to the aqueous dispersion when the conductivity of the aqueous dispersion prior to electrolyte addition is S_{crit} or less, but the conductivity is greater than Sₘᵢₙ, where S_{crit} is greater than Sₘᵢₙ, whereby the conductivity of the aqueous dispersion in the flow-through cell after electrolyte addition is S_{crit} or more. As an example, the value of S_{crit} may be from 500 mS/m to 8S/m, such as from 1 to 4 S/m, for instance from 2 to 3 S/m.

This arrangement means that in a situation where the aqueous dispersion still contains high levels of particulates which need to be flocculated, yet has a low conductivity associated with the aqueous portion of the aqueous dispersion such that an excessive electrical power consumption would occur at the desired current for dissolution of adequate flocculant from the sacrificial electrodes, then by the addition of further electrolyte to the aqueous dispersion, it can be arranged that the conductivity of the aqueous dispersion is increased so that an adequate level of current may still be passed through the aqueous dispersion in order to generate sufficient dissolved sacrificial electrode material to provide adequate flocculation, without excessive electrical power being required. The added electrolyte reduces the conductivity of the aqueous dispersion so that a higher current may be passed through the aqueous dispersion without excessive electrical power consumption that would otherwise be associated with such current if the conductivity of the aqueous dispersion had not been decreased by addition of electrolyte.

For this exemplary embodiment of the first aspect of the invention, it may be arranged that no electrolyte is added to the aqueous dispersion when the conductivity of the aqueous dispersion prior to electrolyte addition is Sₘᵢₙ or less.

Once again, it will be understood that the value chosen for S_{crit} will depend upon the nature of the particular aqueous dispersion being treated, and S_{crit} will be easily determinable, for instance by setting an upper limit on electrical power consumption that may be tolerated alongside the maximum particulate levels that are acceptable following flocculation and separation of the purified water from the aqueous dispersion.

The electrolyte may be added as a sodium chloride solution having a greater conductivity than S_{crit}.

The conductivity of the aqueous dispersion prior to any electrolyte addition may be derived from measurements of the voltage and current across the opposed electrodes and the quantity of any electrolyte added to the aqueous dispersion.

In order to prevent excessive build-up of oxide/debris on the sacrificial electrodes, the method of the invention may involve periodically reversing the polarity of the voltage applied across the opposed electrodes with an interval T between the current having zero amplitude at each reversal. It will be understood that this switches the cathodic surfaces to become anodic surfaces and vice versa for the opposed electrodes and for the sacrificial electrodes. The interval T is suitably from 1 to 60 minutes, such as from 2 to 30 minutes. Shorter intervals than 1 minute may not allow sufficient time for removal of oxide/debris layers from the electrodes following reversal, whereas intervals longer than 1 hour can lead to excessive consolidation of oxide/debris layers whereby removal is more difficult.

The first aspect of the invention may also comprise periodically reversing the polarity of the voltage applied across the opposed electrodes with an interval T between the current having zero amplitude at each reversal, wherein following each reversal of polarity, the aqueous dispersion flow rate through the region between the opposed electrodes is arranged to have a value of F_{R} or more, for a period T_{R} of 0.05T or more, wherein F_{R} is 1.1 F_{M} or more, and wherein F_{M} is the mean flow rate between each reversal.

Following each reversal of polarity, the aqueous dispersion flow rate through the region between the opposed electrodes is arranged to have a value of F_{R} or more, for a period T_{R} of 0.05T or more, wherein F_{R} is 1.1 F_{M} or more. F_{M} is the mean flow rate between each reversal. In other words, for the period T_{R}, the flow rate of the aqueous dispersion is increased to a level which is at least 1.1 times the mean flow rate between reversals, and which may be even more, say up to 6 times the mean flow rate between reversals. The mean flow rate between reversals is simply the time integral of the flow rate as a function of time over the period T, divided by T. Without wishing to be found by any theory, it is thought that the high level of flow rate for the period T_{R} results in the oxide/debris layer, formed on the opposed and sacrificial electrodes during the previous period T, being removed in a synergistic manner when combined with the reversal of current leading to electrostatic repulsion of the oxide/debris particles on the electrodes.

The flow rate of the aqueous dispersion may, for instance, be controlled by means of a pumping arrangement, such as a pump in a feed line running from a storage tank for the aqueous dispersion to an electrocoagulation chamber holding the electrodes.

Alternatively or additionally, the current may be varied between each reversal, but the flow rate does not have to be varied. Hence, the method may comprise periodically reversing the polarity of the voltage applied across the opposed electrodes with an interval T between the current having zero amplitude at each reversal, wherein following each polarity reversal, the amplitude of the current is controlled to have an amplitude of C_{R} or more, for a period T_{P} of 0.05T or more, wherein C_{R} is 1.1 C_{M} or more, and wherein C_{M} is a mean current amplitude between each reversal.

C_{R} may be 1.2 C_{M} or more, such as 1.3 C_{M} or more, for instance 1.5 C_{M} or more. However, C_{R} is suitably 5 C_{M} or less, such as 4 C_{M} or less or 3 C_{M} or less. It will be understood that the amount of dissolved sacrificial electrode material will depend upon the value of current, so excessively high currents may lead to excessively rapid degradation of the sacrificial electrodes.

Without wishing to be bound by any theory, it is thought that the increase in the current following reversal may assist in repelling oxide/debris from the relevant surfaces of the sacrificial electrodes.

The period T_{P} may be 0.1 T or more. T_{P} should be less than 0.5 T, preferably less than 0.4 T and more preferably less than 0.3T. It will be understood that when the current amplitude is higher, the level of dissolved sacrificial electrode material entering the aqueous dispersion, for a particular current value, will be higher than it would be when the current amplitude is at a lower value.

The current amplitude may be maintained at a substantially constant value over the period T_{P}, or may vary provided it remains in excess of C_{R}.

Following each period T_{P} the current amplitude may be reduced to a substantially constant value C_{C} over a current drop period of 0.05T or less, and maintained at C_{C} until a subsequent reversal. The current amplitude may be controlled to increase monotonically from zero at reversal to a value of C_{R} or more within a current rise period of 0.05T or less.

This arrangement of pulses in current and/or flow at or following reversal in polarity may reduce oxide build-up on the electrodes and sacrificial electrodes and reduce maintenance requirements when used in combination with the power control of the method of the invention.

A second aspect of the invention provides an apparatus for applying electrocoagulation treatment to an aqueous dispersion comprising: a flow-through chamber comprising opposed electrodes and sacrificial electrodes positioned therebetween; a power supply arranged to apply a voltage across the electrodes and to cause a current to flow therebetween; and a controller adapted to derive the conductivity of said aqueous solution in the flow-through chamber from the voltage and current between the first and second electrodes; wherein the controller is arranged to control the power supply to vary the voltage and the current according to the conductivity of the of said aqueous dispersion using the method according to the first aspect of the invention.

The apparatus may comprise a source of electrolyte and a dosing means for combining the electrolyte with the aqueous dispersion prior to or during passage of the aqueous dispersion through the flow-through cell in use, and the controller may be adapted to control the dosing of the electrolyte into the aqueous dispersion in use in accordance with methods according to the first aspect of the invention where an electrolyte is added to the aqueous dispersion when the conductivity of the aqueous dispersion prior to electrolyte addition is S_{crit} or less, but greater than Sₘᵢₙ, where S_{crit} is greater than Sₘᵢₙ, whereby the conductivity of the aqueous dispersion in the flow-through cell after electrolyte addition is S_{crit} or more.

The source of electrolyte for this second aspect of the invention may be a reservoir adapted to hold electrolyte solution and the dosing means may be a pump controlled by the controller to dose the electrolyte solution into the aqueous dispersion.

The apparatus of the second aspect of the invention may comprise a conductivity monitor arranged for measurement of the conductivity of the aqueous dispersion. This monitor may measure the conductivity prior to addition of any electrolyte by being positioned upstream of any electrolyte addition location in the flow of the aqueous dispersion.

All of the preferred and/or optional features of the first aspect of the invention are also disclosed in relation to the apparatus of the second aspect of the invention, where applicable.

The flow rate of the aqueous dispersion through the flow-through cell may for instance, be controlled by means of a pumping arrangement, such as a pump in a feed line running from a storage tank for the aqueous dispersion to the flow-through electrocoagulation chamber holding the electrodes.

The pumping arrangement for the aqueous dispersion may be controlled by the controller which is synchronised to the voltage and current reversals between the opposed electrodes.

Although some variation in flow rate of the aqueous dispersion may also be used to vary the concentration of dissolved flocculant arising from the sacrificial electrodes (so that, for instance, at constant current, a lower flow rate will provide a greater concentration of flocculant in the aqueous dispersion) it must be understood that in real, practical arrangements, there may be a constant generation of aqueous dispersion from a plant, that must be dealt with, and a limited capacity for storage of aqueous dispersion in order to allow for variation in the flow rate delivered to the electrocoagulation flow-through chamber.

Also disclosed herein is a controller arranged to control the power supply to vary the voltage, the current and any electrolyte addition for an electrocoagulation apparatus according to the method of the first aspect of the invention. The controller may also be arranged to control the flow of aqueous dispersion through the flow-through cell of the electrocoagulation assembly, for instance by controlling flow control units such as pumps arranged to pump the aqueous dispersion.

Aspects of the invention may be implemented in any convenient form. For example computer programs may be provided to carry out the methods described herein. Such computer programs may be carried on appropriate computer readable media which term includes appropriate tangible storage devices (e.g. discs). Aspects of the invention can also be implemented by way of appropriately programmed computers, for instance as the controller for use in aspect of the invention.

The aqueous dispersion to be used with the invention may typically be an aqueous flowable liquid (meaning having at least 70% by weight of water present, such as 80% or more, or 90% or more), where the liquid may include contaminants in particulate form, the removal of which is desired, either to purify the water for later use or to extract the contaminant for separation, purification and subsequent re-use. For instance, where a contaminant includes a heavy metal, it may be desirable to both remove the metal from the water for the sake of water re-use and also desirable to extract and separate and purify the metal for recycling purposes. This may also be true where the contaminant is a fatty material, for instance in colloidal form, so that the purified water may be re-used and the separated fat may be recycled as fuel or fodder for animals.

Also described herein is the use of the aspects of the invention when the aqueous dispersion is waste water, contaminated with a fatty materials dispersed therein, so that the electrocoagulation process carried out in the apparatus of the invention may be used to facilitate coagulation and coalescence of the dispersed fatty materials in order to facilitate subsequent bulk separation of the fatty materials from consequently purified water.

Also described herein is the use of the aspects of the invention when the aqueous dispersion is water containing a material to be extracted dispersed therein, so that the electrocoagulation process carried out in the apparatus of the invention may be used to facilitate coagulation and coalescence of the materials to be extracted in order to facilitate subsequent bulk separation of the material for subsequent isolation of the material from consequently purified water.

Although the invention has been described with reference to a single flow-through electrocoagulation chamber, it should be understood that a plurality of electrocoagulation chambers may be employed, for instance connected for use in series, or, more preferably, in parallel. For instance, an arrangement may be provided where electrocoagulation chambers connectable in parallel with a first chamber are brought into use sequentially, in parallel with the first chamber, as the flow rate of aqueous dispersion to be dealt with increases.

### DETAILED DESCRIPTION

For a better understanding of the invention, and to show how exemplary embodiments of the same may be carried into effect, reference will be made, by way of example only, to the accompanying diagrammatic Figures, in which:
Figure 1 schematically depicts a cross-sectional view through an embodiment of an apparatus according to the second aspect of the invention;
Figure 2 shows a graph of conductivity S as a function of particulate content N for an embodiment of a first aqueous dispersion suitable for treatment by the electrocoagulation method of the invention;
Figure 3 shows a graph of current amplitude C (solid line) and voltage V (broken line) as a function of the conductivity S of the aqueous dispersion of Figure 1;
Figure 4 shows a graph of conductivity S as a function of particulate content N for an embodiment of a second aqueous dispersion suitable for treatment by the electrocoagulation method of the invention;
Figure 5 shows a graph of conductivity S as a function of particulate content N for an embodiment of a second aqueous dispersion suitable for treatment by the electrocoagulation method of the invention where electrolyte addition has been used to increase the conductivity over a portion of the graph;

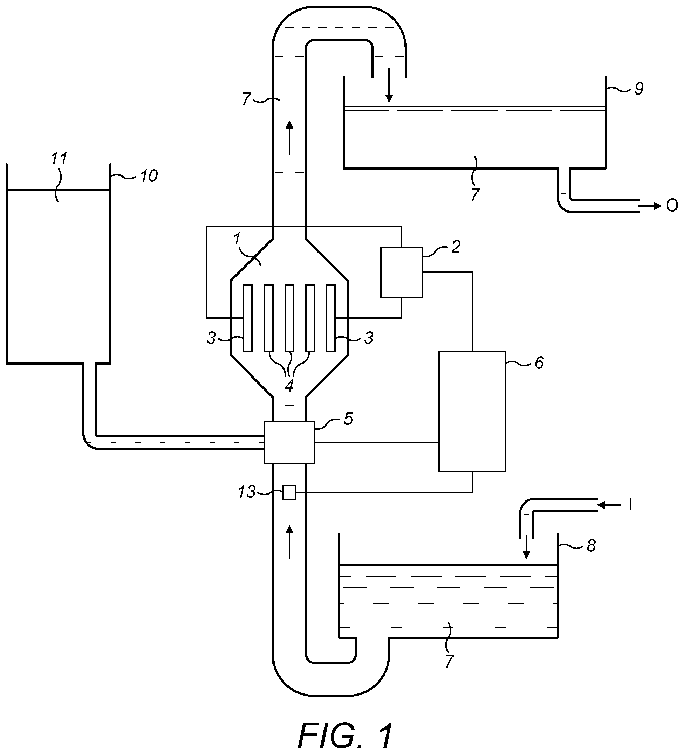

Turning to the embodiment of the first aspect of the invention shown schematically in Figure 1, a flow-through chamber 1 encloses a pair of opposed electrodes 3 with sacrificial electrodes 4 positioned between the opposed electrodes and not electrically connected to the opposed electrodes 3 other than through the aqueous dispersion 7.

A power supply 2 is arranged to provide a voltage difference between the two opposed electrodes in order to generate an electric field between the electrodes so the current may pass from one electrode to the other opposed electrode through the aqueous dispersion and the sacrificial electrodes 4. A voltage of 1 to 500V may be applied, with a direct current in the range from 1 to 55 A passing between the electrodes controlled in the manner set out below in accordance with the invention.

A flow control unit 5 in the form of an in-line pump draws aqueous dispersion 7 to be treated, such as waste water containing oil or fat particles dispersed therein, particularly colloidal oil or fat particles in the form of an emulsion or Pickering emulsion, from a pre-treatment holding tank 8 and forces it upwards through the flow-through chamber and past and between the opposed and sacrificial electrodes for collection in a post-EC (post-electrocoagulation) holding tank 9.

A reservoir 10 holds an electrolyte solution 11 which is connected by a fluid connection to the flow control unit 5. The flow control unit 5 includes a dosing pump (not shown in detail) which is arranged to inject and blend electrolyte solution 11 of known concentration with the aqueous dispersion 7 in proportions in accordance with the invention. A controller 6 is operably connected to the flow control unit 5 and to the power supply to in order to control these pieces of apparatus to control the flow rate of the aqueous dispersion 7 through the flow-through chamber, to vary the current amplitude passing between the opposed electrodes 3 through the aqueous dispersion 7 in accordance with the method of the first aspect of the invention, and to control the amount of electrolyte solution 11 incorporated into the aqueous dispersion 7 in accordance with the method of the first aspect of the invention.

In this example, the aqueous dispersion 7 may include colloidal particles of fatty matter dispersed in water, which are fed into the pre-EC (pre-electrocoagulation) holding tank 8 from a downstream process in the direction of arrow I. Following electrocoagulation treatment in the flow-through chamber 1, the colloidal fat particles will flocculate as a result of the presence of the highly charged dissolved material (aluminium hydroxide) from the sacrificial electrodes 4. Following transient collection of the post-EC treated aqueous dispersion 7 in the post-EC holding tank 9 the aqueous dispersion 7 flows in the direction of arrow O to a further processing stage, not shown, in which the flocculated fatty material is separated from the water, leading to purification of the water. This may be achieved, for instance, in a separate settling tank.

The holding tanks 8, 9 allow for the changes in flow rate of aqueous dispersion 7 required for putting the method of the invention into effect to be handled with in a relatively efficient manner with reduced risk of air locks or overflows of aqueous dispersion.

For this embodiment, the opposed electrodes 3 are of steel while the sacrificial electrodes 4 are of aluminium. With such an arrangement, the opposed steel electrodes 3 may endure through many replacement, or refurbished, sets of aluminium sacrificial electrodes 4.

In a waste-water treatment system for purification of waste-water including colloidal fatty particles, the waste-water, after passing though the apparatus and being subjected to electrocoagulation treatment, may be transferred to a separation chamber, in which the particles of fatty material, now less mutually repulsive as a result of the presence of highly charged cations, may flocculate together to form a floating mass over the remaining purified water in the separation chamber, with the flocculated mass also including entrapped gas generated in the electrocoagulation process. The purified water may be flowed out of the separation chamber for storage, further treatment or disposal, with the floating mass removed be a suitable means such as surface scraping or overflow to a fat collection chamber.

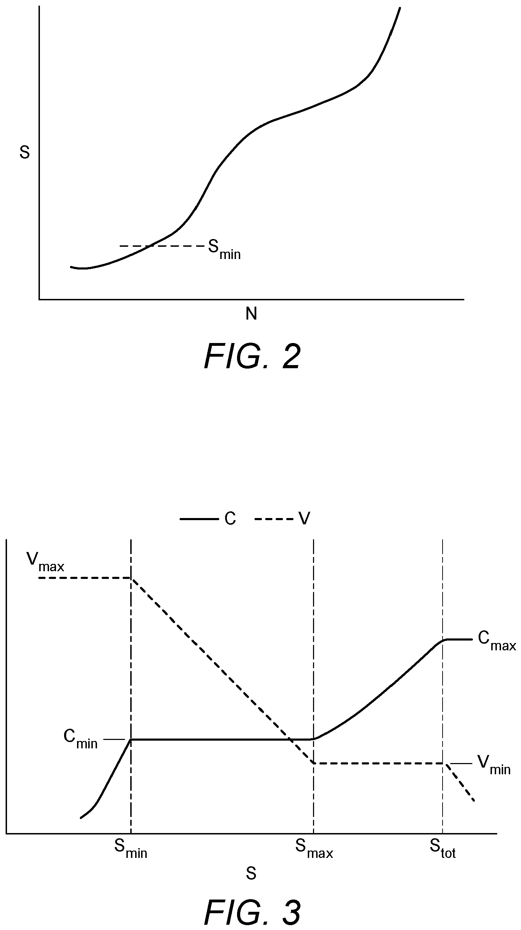

Figure 2 shows a graph of conductivity S as a function of particulate content N for an embodiment of a first aqueous dispersion suitable for treatment by the electrocoagulation method of the invention. It will be understood that this curve is meant to schematically represent the average value of conductivity as a function of particulate content of the aqueous dispersion to be fed through the electrocoagulation apparatus according to the invention. The conductivity increases or decreases with the particulate content in a non-linear manner for this example.

Figure 3 shows a graph of current amplitude C (solid line) and voltage V (broken line) as a function of the conductivity S of the aqueous dispersion of Figure 1 with the controller 6 controlling the current and voltage between the opposed electrodes in accordance with a first embodiment of a method according the first aspect of the invention. For this first embodiment, no electrolyte is added.

Turning to Figure 3, the curves will be explained moving from low to high conductivity. It can be seen that at low conductivities, where S is Sₘᵢₙ or less, the voltage is maintained at a constant value Vₘₐₓ (450V in this example) whilst the current is allowed to fall from a value Cₘᵢₙ (10A) with decreasing conductivity S (decrease in conductivity corresponding to increased resistance between the opposed electrodes leading to the fall in current at constant voltage). Over the range Sₘᵢₙ to Sₘₐₓ, the current is held constant at the value Cₘᵢₙ (10A) and because the resistance is falling over this range, and because voltage is proportional to resistance at constant current, this is achieved by allowing the voltage across the electrodes to fall as conductivity increases up to Sₘₐₓ.

When the voltage drops to a value Vₘᵢₙ (50V) at the conductivity Sₘₐₓ, the current is now allowed to increase in line with the continuing falling resistance as the particle concentration N in the aqueous dispersion increases. The current continues to increase up to a value Cₘₐₓ corresponding to conductivity Sₜₒₜ, the maximum current deliverable by the power supply 2. For higher conductivities, the voltage V is allowed to drop below Vₘᵢₙ with the current held at Vₘₐₓ.

The values of Sₘᵢₙ, Sₘₐₓ and Sₜₒₜ are chosen to ensure:
1) ...that Sₘᵢₙ is such that the particulate level N in the aqueous dispersion is so low for values below Sₘᵢₙ that the reduction in levels of dissolved flocculant generated at conductivities below Sₘᵢₙ does not lead to the final, purified water having a particulate level in excess of a desired maximum particulate level.
2) ...that for conductivities in the range Sₘᵢₙ to Sₘₐₓ, the current Cₘᵢₙ is adequate to ensure that sufficient flocculant is dissolve to ensure that the higher particulate levels over this range of conductivities are reduced by the dissolved flocculant, after flocculation and separation, to ensure that the final, purified water has a particulate level less than a desired maximum particulate level.
3) ...for conductivities in excess of Sₘₐₓ, the voltage Vₘᵢₙ and current, increasing with conductivity up to Cₘₐₓ, are sufficient to provide adequate flocculation for the high particulate levels present so that the final, purified water has a particulate level less than a desired maximum particulate level.

It will be understood that for conductivities in excess of Sₜₒₜ, the electrocoagulation method of the invention may not be sufficient to achieve a final particulate level in the treated water which is less than the desired maximum particulate level. In such a case, the treated, separated and inadequately purified water may be treated to a further, subsequent electrocoagulation step, either according to the invention, or otherwise, in order to achieve the desired particulate level.

The method of the invention allows the electrocoagulation process to operate automatically, without operator intervention, over a wide range of particulate levels (from zero upwards to a maximum level Nₜₒₜ corresponding to Sₜₒₜ, in order to ensure that the particulate levels present in the resulted, treated, purified water do not exceed a predetermined level (Nₘₐₓ), and in a manner which provides a reduced electrical power consumption compared to conventional electrocoagulation processes.

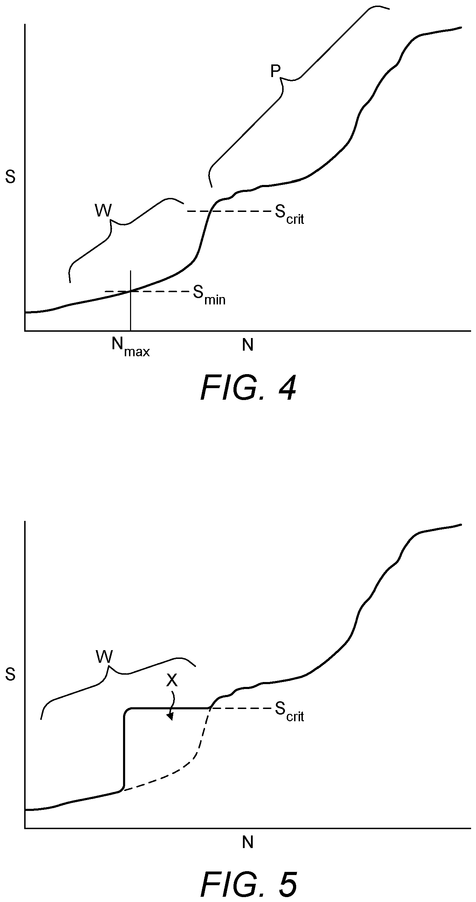

Figure 4 shows a graph of conductivity S as a function of particulate content N for an embodiment of a second aqueous dispersion suitable for treatment by the electrocoagulation method of the invention. This second embodiment is representative of a plant where wash-down with water may take place (indicated by the region W where conductivity is low but N may exceed the desired target maximum target level Nₘₐₓ).

As above, the method of the invention may be applied for avoiding excessive electrical power consumption by allowing the current to fall when the conductivity drops below a value Sₘᵢₙ (with Nₘₐₓ already achievable without further electrocoagulation). However, for conductivities above Sₘₐₓ, but still in the region W where removal of particulates is required by electrocoagulation, it may be that the current required, combined with the high resistance across the electrodes, which is a consequence of the low conductivity in region W, may lead to very high levels of electrical power consumption.

In order to avoid such high power consumption, electrolyte may be added, by using the controller 6 to control the flow control unit 5 to inject and blend electrolyte solution 11 of known concentration with the aqueous dispersion 7 into the aqueous dispersion in proportions in accordance with the invention.

Figure 5 shows a graph of conductivity S as a function of particulate content N for the embodiment of the second aqueous dispersion where electrolyte addition has been used to increase the conductivity to the value S_{crit} in the region indicated by X over a portion of the graph. This increased conductivity in region X allows for sufficient current to provide adequate flocculant needed to drop the particulate level below Nₘₐₓ for the final, purified and separated water, without excessive power consumption.

Although a few exemplary embodiments have been shown and described, it will be appreciated by those skilled in the art that various changes and modifications may be made without departing from the scope of the invention, as defined in the appended claims.

All of the features disclosed in this specification (including any accompanying claims, and drawings), and/or all of the steps of any method or process so disclosed, may be combined in any combination, except combinations where at least some of such features and/or steps are mutually exclusive.

## Claims

1. A method for applying electrocoagulation treatment to an aqueous dispersion, the method comprising:
a: flowing the aqueous dispersion through a region of a flow-through cell comprising sacrificial electrodes and located between opposed electrodes, and
b: applying a voltage V across the opposed electrodes whereby a current C is passed between the opposed electrodes through the sacrificial electrodes whereby the sacrificial electrodes donate cations to the aqueous dispersion,
wherein the voltage is maintained at or below a value Vₘₐₓ when the conductivity of the aqueous dispersion is Sₘᵢₙ or less;
wherein the voltage V is controlled to decrease from Vₘₐₓ to Vₘᵢₙ, as the conductivity of the aqueous dispersion increases from Sₘᵢₙ to Sₘₐₓ, with the current C maintained at a value Cₘᵢₙ when the conductivity of the aqueous solution is between Sₘᵢₙ and Sₘₐₓ; and
wherein the voltage V is maintained at Vₘᵢₙ for conductivities of the aqueous dispersion increases from Sₘₐₓ to Sₜₒₜ, with the current C increasing from Cₘᵢₙ to Cₘₐₓ as the conductivity of the aqueous solution increases from Sₘₐₓ to Sₜₒₜ.

2. A method according to claim 1 wherein Vₘₐₓ is from 240 to 520 V.

3. A method according to claim 1 or claim 2 wherein Sₘᵢₙ is such that the current passed between the opposed electrodes, when the voltage applied is Vₘₐₓ, is from 5 to 20 A.

4. A method according to any preceding claim wherein the conductivity of the aqueous dispersion is measured by a conductivity monitor.

5. A method according to any one of claims 1 to 3 wherein the conductivity of the aqueous dispersion is derived from measurements of the voltage and current across the opposed electrodes.

6. A method according to any preceding claim wherein an electrolyte is added to the aqueous dispersion when the conductivity of the aqueous dispersion prior to electrolyte addition is S_{crit} or less, but greater than Sₘᵢₙ, where S_{crit} is greater than Sₘᵢₙ, whereby the conductivity of the aqueous dispersion in the flow-through cell after electrolyte addition is S_{crit} or more, optionally wherein no electrolyte is added to the aqueous dispersion when the conductivity of the aqueous dispersion prior to electrolyte addition is Sₘᵢₙ or less, optionally wherein the electrolyte is added as a sodium chloride solution having a greater conductivity than S_{crit}.

7. A method according to claim 6 wherein the conductivity of the aqueous dispersion prior to any electrolyte addition is derived from measurements of the voltage and current across the opposed electrodes and the quantity of any electrolyte added to the aqueous dispersion.

8. An apparatus for applying electrocoagulation treatment to an aqueous dispersion comprising:
a flow-through chamber comprising opposed electrodes and sacrificial electrodes positioned therebetween;
a power supply arranged to apply a voltage across the electrodes and to cause a current to flow therebetween; and
a controller adapted to derive the conductivity of said aqueous solution in the flow-through chamber from the voltage and current between the first and second electrodes;
wherein the controller is arranged to control the power supply to vary the voltage and the current according to the conductivity of the of said aqueous dispersion using the method of any one of claims 1 to 5.

9. An apparatus according to claim 8 further comprising a source of electrolyte and a dosing means for combining said electrolyte with said aqueous dispersion prior to or during passage of said aqueous dispersion through the flow-through cell in use, and wherein the controller is adapted to control the dosing of said electrolyte into the aqueous dispersion in use in accordance with claim 6 or claim 7.

10. An apparatus according to claim 9 wherein the source of electrolyte is a reservoir adapted to hold electrolyte solution and the dosing means is a pump controlled by the controller to dose said electrolyte solution into said aqueous dispersion.

11. An apparatus according to claim 9 or claim 10 wherein the controller is adapted to derive the conductivity of said aqueous solution prior to electrolyte addition from the voltage and current between the opposed electrodes, and from an amount of any said electrolyte added thereto.

## Patentansprüche

1. Verfahren zum Ausüben von Elektrokoagulationsbehandlung auf eine wässrige Dispersion, das Verfahren aufweisend:
a) Strömen der wässrigen Dispersion durch eine Region einer Durchflusszelle, die Opferelektroden aufweist und zwischen gegenüberliegenden Elektroden liegt, und
b) Anlegen einer Spannung V über die gegenüberliegenden Elektroden, wobei ein Strom C zwischen den gegenüberliegenden Elektroden durch die Opferelektroden geleitet wird, wobei die Opferelektroden Kationen an die wässrige Dispersion abgeben,
wobei die Spannung auf oder unter einem Wert Vₘₐₓ gehalten wird, wenn die Leitfähigkeit der wässrigen Dispersion Sₘᵢₙ oder weniger beträgt;
wobei die Spannung V derart gesteuert wird, dass sie von Vₘₐₓ auf Vₘᵢₙ absinkt, wenn die Leitfähigkeit der wässrigen Dispersion von Sₘᵢₙ zu Sₘₐₓ zunimmt, wobei der Strom C auf einem Wert Cₘᵢₙ gehalten wird, wenn die Leitfähigkeit der wässrigen Lösung zwischen Sₘᵢₙ und Sₘₐₓ liegt; und
wobei die Spannung V auf Vₘᵢₙ gehalten wird, wenn Leitfähigkeiten der wässrigen Dispersion von Sₘₐₓ zu Sₜₒₜ zunehmen, wobei der Strom C von Cₘᵢₙ zu Cₘₐₓ zunimmt, wenn die Leitfähigkeit der wässrigen Lösung von Sₘₐₓ zu Sₜₒₜ zunimmt.

2. Verfahren nach Anspruch 1, wobei Vₘₐₓ von 240 bis 520 V beträgt.

3. Verfahren nach Anspruch 1 oder Anspruch 2, wobei Sₘᵢₙ derart ist, dass der Strom, der zwischen den gegenüberliegenden Elektroden geleitet wird, wenn die angelegte Spannung Vₘₐₓ ist, von 5 bis 20 A beträgt.

4. Verfahren nach einem der vorhergehenden Ansprüche, wobei die Leitfähigkeit der wässrigen Dispersion durch einen Leitfähigkeitsmonitor gemessen wird.

5. Verfahren nach einem der Ansprüche 1 bis 3, wobei die Leitfähigkeit der wässrigen Dispersion aus Messungen der Spannung und des Stroms über die gegenüberliegenden Elektroden hinweg abgeleitet wird.

6. Verfahren nach einem der vorhergehenden Ansprüche, wobei der wässrigen Dispersion ein Elektrolyt zugegeben wird, wenn die Leitfähigkeit der wässrigen Dispersion vor der Elektrolytzugabe S_{crit} oder geringer, jedoch größer als Sₘᵢₙ ist, wobei S_{crit} größer als Sₘᵢₙ ist, wobei die Leitfähigkeit der wässrigen Dispersion in der Durchflusszelle nach der Elektrolytzugabe S_{crit} oder mehr ist, wobei der wässrigen Dispersion optional kein Elektrolyt zugegeben wird, wenn die Leitfähigkeit der wässrigen Dispersion vor Elektrolytzugabe Sₘᵢₙ oder geringer ist, wobei das Elektrolyt optional als eine Natriumchloridlösung mit einer größeren Leitfähigkeit als S_{crit} zugegeben wird.

7. Verfahren nach Anspruch 6, wobei die Leitfähigkeit der wässrigen Dispersion vor jeglicher Elektrolytzugabe aus Messungen der Spannung und des Stroms über die gegenüberliegenden Elektroden hinweg und der Menge von jeglichem Elektrolyt, das der wässrigen Dispersion zugegeben wird, abgeleitet wird.

8. Vorrichtung zum Ausüben von Elektrokoagulationsbehandlung auf eine wässrige Dispersion, aufweisend:
eine Durchflusskammer, die gegenüberliegende Elektroden und Opferelektroden, die dazwischen positioniert sind, aufweist;
eine Leistungsversorgung, die zum Anlegen einer Spannung über die Elektroden hinweg und zum Bewirken, dass ein Strom dazwischen fließt, angeordnet ist; und
eine Steuerung, die zum Ableiten der Leitfähigkeit der wässrigen Lösung in der Durchflusskammer aus der Spannung und dem Strom zwischen der ersten und zweiten Elektrode geeignet ist;
wobei die Steuerung zum Steuern der Leistungsversorgung zum Variieren der Spannung und des Stroms gemäß der Leitfähigkeit der wässrigen Dispersion unter Benutzung des Verfahrens nach einem der Ansprüche 1 bis 5 angeordnet ist.

9. Vorrichtung nach Anspruch 8, ferner aufweisend eine Elektrolytquelle und ein Zumessmittel zum Kombinieren des Elektrolyts mit der wässrigen Dispersion vor oder während des Durchflusses der wässrigen Dispersion durch die Durchflusszelle im Gebrauch, und wobei die Steuerung zum Steuern des Zumessens des Elektrolyts in die wässrige Dispersion im Gebrauch gemäß Anspruch 6 oder Anspruch 7 geeignet ist.

10. Vorrichtung nach Anspruch 9, wobei die Elektrolytquelle ein Sammelbehälter ist, der zum Enthalten von Elektrolytlösung geeignet ist, und das Zumessmittel eine Pumpe ist, die durch die Steuerung zum Zumessen der Elektrolytlösung in die wässrige Dispersion gesteuert wird.

11. Vorrichtung nach Anspruch 9 oder 10, wobei die Steuerung zum Ableiten der Leitfähigkeit der wässrigen Lösung vor Elektrolytzugabe aus der Spannung und dem Strom zwischen den gegenüberliegenden Elektroden und aus einer Menge von jeglichem dazu zugegebenem Elektrolyt geeignet ist.

## Revendications

1. Procédé d'application d'un traitement d'électrocoagulation à une dispersion aqueuse, le procédé comprenant :
a : l'écoulement de la dispersion aqueuse à travers une région d'une cellule à circulation comprenant des électrodes sacrificielles et située entre des électrodes opposées, et
b : application d'une tension V de part et d'autre des électrodes opposées de sorte qu'un courant C passe entre les électrodes opposées à travers les électrodes sacrificielles de sorte que les électrodes sacrificielles donnent des cations à la dispersion aqueuse,
dans lequel la tension est maintenue à ou au-dessous d'une valeur Vₘₐₓ lorsque la conductivité de la dispersion aqueuse est Sₘᵢₙ ou plus faible ;
dans lequel la tension V est régulée de façon à diminuer de Vₘₐₓ à Vₘᵢₙ, lorsque la conductivité de la dispersion aqueuse augmente de Sₘᵢₙ à Sₘₐₓ, le courant C étant maintenu à une valeur Cₘᵢₙ lorsque la conductivité de la solution aqueuse est comprise entre Sₘᵢₙ et Sₘₐₓ ; et
dans lequel la tension V est maintenue à Vₘᵢₙ pour des conductivité de la dispersion aqueuse augmentant de Sₘₐₓ à Sₜₒₜ, le courant C augmentant de Cₘᵢₙ à Cₘₐₓ lorsque la conductivité de la solution aqueuse augmente de Sₘₐₓ à Sₜₒₜ.

2. Procédé selon la revendication 1, dans lequel Vₘₐₓ est de 240 à 520 V.

3. Procédé selon la revendication 1 ou la revendication 2, dans lequel Sₘᵢₙ est tel que le courant passant entre les électrodes opposées, lorsque la tension appliquée est Vₘₐₓ, est de 5 à 20 A.

4. Procédé selon l'une quelconque des revendications précédentes, dans lequel la conductivité de la dispersion aqueuse est mesurée par un moniteur de conductivité.

5. Procédé selon l'une quelconque des revendications 1 à 3, dans lequel la conductivité de la dispersion aqueuse est dérivée de mesures de la tension et du courant de part et d'autre des électrodes opposées.

6. Procédé selon l'une quelconque des revendications précédentes, dans lequel un électrolyte est ajouté à la dispersion aqueuse lorsque la conductivité de la dispersion aqueuse avant l'ajout d'électrolyte est S_{crit} ou moins, mais supérieur à Sₘᵢₙ, où S_{crit} est supérieur à Sₘᵢₙ, dans lequel la conductivité de la dispersion aqueuse dans la cellule à circulation après ajout d'électrolyte est S_{Crit} ou plus, facultativement dans lequel aucun électrolyte n'est ajouté à la dispersion aqueuse lorsque la conductivité de la dispersion aqueuse avant l'ajout d'électrolyte est Sₘᵢₙ ou moins, facultativement dans lequel l'électrolyte est ajouté sous la forme d'une solution de chlorure de sodium ayant une conductivité supérieure à S_{crit}.

7. Procédé selon la revendication 6, dans lequel la conductivité de la dispersion aqueuse avant qu'un ajout d'électrolyte soit dérivé de mesures de la tension et du courant de part et d'autre des électrodes opposées et de la quantité d'une électrolyte quelconque ajoutée à la dispersion aqueuse.

8. Appareil pour appliquer un traitement d'électrocoagulation à une dispersion aqueuse comprenant :
une chambre à circulation comprenant des électrodes opposées et des électrodes sacrificielles positionnées entre celles-ci ;
une alimentation électrique agencée pour appliquer une tension de part et d'autre des électrodes et amener un courant à s'écouler entre celles-ci ; et
un dispositif de commande adaptée pour déduire la conductivité de ladite solution aqueuse dans la chambre à circulation à partir de la tension et du courant entre les première et deuxième électrodes ;
dans lequel le dispositif de commande est agencé pour commander l'alimentation électrique de façon à faire varier la tension et le courant en fonction de la conductivité de ladite dispersion aqueuse au moyen du procédé selon l'une quelconque des revendications 1 à 5.

9. Appareil selon la revendication 8, comprenant en outre une source d'électrolyte et des moyens de dosage pour combiner ledit électrolyte avec ladite dispersion aqueuse avant ou pendant le passage de ladite dispersion aqueuse à travers la cellule à circulation en cours d'utilisation, et dans lequel le dispositif de commande est adapté pour commander le dosage dudit électrolyte dans la dispersion aqueuse en cours d'utilisation selon la revendication 6 ou la revendication 7.

10. Appareil selon la revendication 9, dans lequel la source d'électrolyte est un réservoir adapté pour maintenir la solution d'électrolyte et les moyens de dosage est une pompe commandée par le dispositif de commande pour doser ladite solution d'électrolyte dans ladite dispersion aqueuse.

11. Appareil selon la revendication 9 ou la revendication 10, dans lequel le dispositif de commande est adapté pour déduire la conductivité de ladite solution aqueuse avant l'ajout d'électrolyte à partir de la tension et du courant entre les électrodes opposées, et à partir d'une quantité dudit électrolyte éventuellement ajouté à celle-ci.
